# EUROPÄISCHE PATENTANMELDUNG

(11) **EP 3 296 143 A1**
(43) Veröffentlichungstag der Anmeldung: **21.03.2018**
(21) Anmeldenummer: 17001394.0
(22) Anmeldetag: 14.08.2017
(51) Int. Cl.: B60L 11/18

(54) **ANSCHLUSSEINHEIT FÜR EIN AKTIV GEKÜHLTES KABEL**

(30) Priorität: 14.09.2016 DE 102016117261
(71) Anmelder: HARTING Automotive GmbH, 32339 Espelkamp (DE)
(72) Erfinder: Beimdieck, Carsten, 49565 Bramsche (DE); Bruland, Alexander, 32369 Rahden (DE)

(57) **Zusammenfassung**

Die Erfindung bezieht sich auf eine Anschlusseinheit für (2) ein fluidgekühltes elektrisches Kabel (16), wobei die Anschlusseinheit (2) ein Gehäuse (9) umfasst, welches eine Kabelanschlussöffnung (10), eine Fluideingangsöffnung (11) und eine Fluidausgangsöffnung (12) aufweist.

## Beschreibung

Die Erfindung geht aus von einen Anschlusseinheit für ein fluidgekühltes Kabel nach dem Oberbegriff des unabhängigen Anspruchs 1. Die Erfindung bezieht sich weiterhin auf ein System aus einem Steckverbinder, einem fluidgekühlten Kabel und einer Anschlusseinheit.

Fluidgekühlte Kabel werden insbesondere zur Übertragung hoher Ströme eingesetzt und beispielsweise zum Anschluss von Ladesteckverbindern verwendet.

Bei Elektrofahrzeugen ist ein schnelles Laden der Batterie notwendig, wenn sich diese Technik gegenüber herkömmlichen Fahrzeugen mit Verbrennungsmotor durchsetzen soll. Die Fahrzeuge mit Verbrennungsmotor können innerhalb von wenigen Minuten vollgetankt werden. Elektrofahrzeuge müssen hier mithalten können. Bei Schnellladevorgängen müssen besonders hohe Ströme eingesetzt werden, was zu einer starken Hitzeentwicklung bei den Ladesteckverbindern führt.

Bei einer so genannten aktiven Kühlung müssen die fluidgekühlten. gekühlten Kabel an ein Kühlaggregat angeschlossen werden, in welchem die von einem Ladesteckverbinder erwärmte Kühlflüssigkeit wieder heruntergekühlt bzw. aufbereitet wird. Gleichzeitig muss das fluidgekühlte Kabel mit elektrischem Strom versorgt werden und entsprechend angeschlossen sein. Das Anschließen eines solchen gekühlten Kabels ist komplex und zeitaufwendig.

### Stand der Technik

Die DE 10 2010 050 562 B3 zeigt einen Ladesteckverbinder für Elektroautos. Die beim Ladevorgang erzeugte Erwärmung des Steckverbinders wird durch eine spiralförmige Flüssigkeitsleitung verringert, die im Wesentlichen im Griffbereich des Steckverbinders verläuft. Durch die Flüssigkeitsleitung fließt eine Kühlflüssigkeit in einem geschlossenen Kühlkreislauf. Die Flüssigkeitsleitung verläuft parallel zum elektrischen Kabel. Das elektrische Kabel und die Kühlflüssigkeitsleitung müssen demnach separat angeschlossen werden. Die Kühlung des Kabels durch eine parallel geführte Kühlflüssigkeitsleitung ist nicht sehr effektiv. Außerdem ist ein derartiger Aufbau nicht platzsparend, was insbesondere im engen Tankstellenbereich zu Problemen führen kann.

### Aufgabenstellung

Die Aufgabe der Erfindung besteht darin eine kompakte Anschlussmöglichkeit für ein fluidgekühltes, elektrisches Kabel mit einem daran angeschlossenen Ladesteckverbinder zu schaffen. Außerdem soll der Zeitaufwand zum Anschließen eines solchen Kabels verringert werden.

Die Aufgabe wird durch die kennzeichnenden Merkmale des unabhängigen Anspruchs 1 gelöst.

Vorteilhafte Ausgestaltungen der Erfindung sind in den Unteransprüchen angegeben.

Die erfindungsgemäße Anschlusseinheit ist zum Anschließen eines fluidgekühlte, elektrischen Kabels vorgesehen. Die Anschlusseinheit weist ein Gehäuse auf, welches eine Kabelanschlussöffnung, eine Fluideingangsöffnung und eine Fluidausgangsöffnung aufweist.

Das fluidgekühlte, elektrische Kabel ist an einem Ende mit einem elektrischen Steckverbinder, vorzugsweise einem Ladesteckverbinder, verbunden. Das andere Ende des fluidgekühlten, elektrischen Kabels ist mit der erfindungsgemäßen Anschlusseinheit verbunden. Über die Anschlusseinheit kann der Steckverbinder - in Verbindung mit dem daran angeschlossenen Kabel - gleichermaßen mit Kühlflüssigkeit und Strom versorgt werden.

Das an der Anschlusseinheit angeschlossene Kabel weist im Querschnitt eine zentralen Kühlflüssigkeitsleitung auf. Um die Kühlflüssigkeitsleitung herum sind einzelne Leiter, hier Kupferadern, positioniert. Die Kupferadern werden von einer flüssigkeitsdichten Folie umschlossen. Auf dieser Folie liegen so genannte Pufferelemente auf, die letztendlich von einem festen Kabelmantel umschlossen sind. Die Pufferelemente sind hohl, so dass im Bereich zwischen flüssigkeitsdichter Folie und Kabelmantel eine Kühlflüssigkeit strömen kann.

Vorzugsweise ist die Anschlusseinheit an ein Kühlaggregat für ein Kühlfluid anschließbar. Das Kühlfluid bewegt sich in einem geschlossenen Kreislauf zwischen Steckverbinder und Kühlaggregat. Im Kühlaggregat wird das Kühlfluid aufbereitet, indem es nach Erwärmung im Ladesteckverbinder wieder heruntergekühlt wird.

Vorzugsweise ist die Anschlusseinheit an eine stationäre Ladesäule für ein Elektrofahrzeug anschließbar. Diese stationäre Ladesäule kann das oben erwähnte Kühlaggregat umfassen. Gleichzeitig wird über die Ladesäule der Strom zum Laden eines Elektrofahrzeugs zur Verfügung gestellt. Durch die aktive Kühlung beim Ladevorgang kann eine sehr geringe Ladezeit für Elektroautos erreicht werden.

Vorzugsweise sind bei der Anschlusseinheit die Kabelanschlussöffnung und die Fluidausgangsöffnung parallel zueinander ausgerichtet. Das durch den Ladevorgang erwärmte Fluid kann so auf dem direkten Wege in das Kühlaggregat zurückgeführt werden.

In einer bevorzugten Variante der Erfindung ist die Fluideingangsöffnung zu der Kabelanschlussöffnung und/oder zu der Fluidausgangsöffnung senkrecht ausgerichtet. Vorzugsweise ist die Fluideingangsöffnung näher an der Fluidausgangsöffnung angeordnet als an der Kabelanschlussöffnung. Bei einer solchen Anordnung kann die über die Fluideingangsöffnung einströmende, frische Kühlflüssigkeit (Fluid) das über die Fluidausgangsöffnung hinausströmende, erwärmte Fluid bereits leicht kühlen. Tests haben gezeigt, dass eine solche Anordnung besonders effektiv arbeitet, da das erwärmte Fluid sehr schnell wieder heruntergekühlt werden kann.

Besonders vorteilhaft ist es, wenn die Fluidausgangsöffnung ein elektrisches Kontaktelement umfasst, welches innerhalb des Gehäuses mit einem fluidgekühlten, elektrischen Kabel verbindbar ist. Durch das Kontaktelement kann der elektrische Anschluss im Inneren des Gehäuses der Anschlusseinheit erfolgen, was eine kompakte Bauweise der Anschlusseinheit begünstigt.

Vorteilhafterweise ist die Verbindung zwischen dem fluidgekühlten, elektrischen Kabel und dem Kontaktelement über eine Crimphülse realisiert. Die Crimphülse sorgt auch für eine mediendichte Anbindung der Kupferleiter des Kabels an das Kontaktelement der Fluidausgangsöffnung.

Vorzugsweise ragt in die Kabelanschlussöffnung das oben beschriebene fluidgekühlte, elektrische Kabel rein. Die Kabelanschlussöffnung ist über eine Kabelverschraubung mediendicht verschlossen.

Die oben beschriebene Anschlusseinheit lässt sich besonders vorteilhaft mit einem Steckverbinder, vorzugsweise mit einem Ladesteckverbinder, und einem fluidgekühlten Kabel einsetzen.

Vorteilhafterweise weist das fluidgekühlte Kabel im Querschnitt eine zentrale Kühlflüssigkeitsleitung auf, wobei um die Kühlflüssigkeitsleitung herum einzelne Leiter, vorzugsweise Kupferadern, positioniert sind. Die Kupferadern sind vorzugsweise von einer flüssigkeitsdichten Folie umschlossen, wobei auf der flüssigkeitsdichten Folie Pufferelemente aufliegen, die von einem festen Kabelmantel umschlossen sind. Die Pufferelemente sind idealerweise hohl ausgestaltet, so dass im Bereich zwischen flüssigkeitsdichter Folie und Kabelmantel eine Kühlflüssigkeit strömen kann.

Der Ladesteckverbinder des oben beschriebenen Systems weist zumindest ein elektrisches Kontaktelement auf, welches ein Kontaktteil und ein Anschlussteil aufweist, wobei das Anschlussteil mit einem elektrischen Leiter eines Kabels verbindbar ist, wobei dem Kontaktelement über das fluidgekühlte Kabel Kühlflüssigkeit zuführbar ist.

### Ausführungsbeispiel

Ein Ausführungsbeispiel der Erfindung ist in den Zeichnungen dargestellt und wird im Folgenden näher erläutert. Es zeigen:
- Fig. 1: eine teilweise geschnittene, perspektivische Darstellung einer Anschlusseinheit,
- Fig. 2: eine schematische Darstellung eines über die Anschlusseinheit an eine Ladesäule angeschlossenen Ladesteckverbinders,
- Fig. 3: eine perspektivische Darstellung eines Kontaktelements des Ladesteckverbinders und
- Fig. 4: eine teilweise geschnittene, perspektivische Darstellung eines Ladesteckverbinders.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

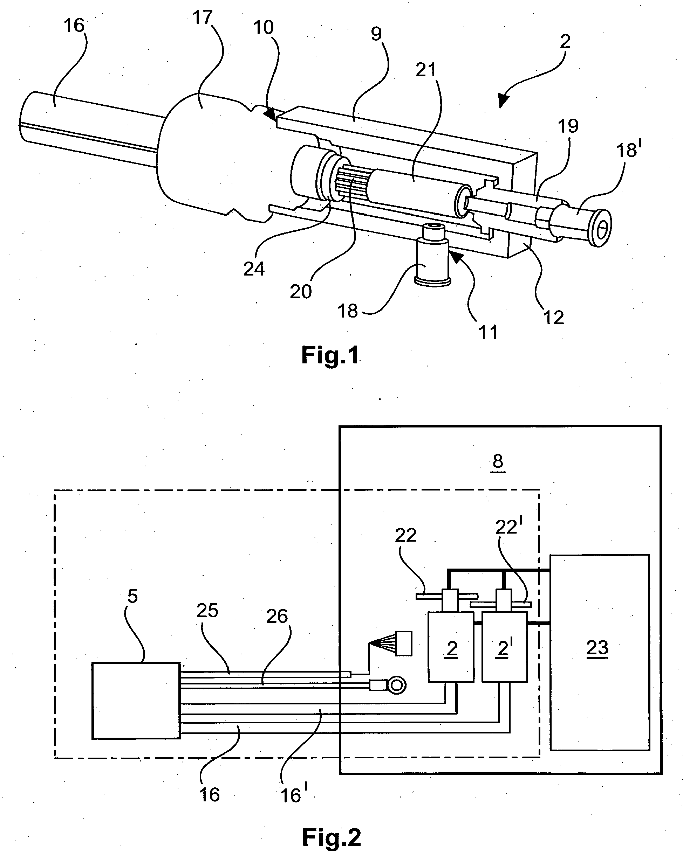

Die Figur 1 zeigt eine Anschlusseinheit 2, mit welcher ein Ladesteckverbinder 5 an eine Ladesäule 8 angeschlossen werden kann. Die Anschlusseinheit 2 weist ein kastenförmiges Gehäuse 9 auf, welches wiederum drei Öffnungen, eine Kabelanschlussöffnung 10, eine Fluideingangsöffnung 11 und eine Fluidausgangsöffnung 12 aufweist. In der Kabelanschlussöffnung 10 ist ein fluidgekühltes Kabel 16 über eine Kabelverschraubung 17 befestigt. Die Fluideingangsöffnung 11 ist mit einem Fluidstutzen 18 versehen. Die Fluidausgangsöffnung 12 enthält ein elektrisches Kontaktelement 19, welches im Inneren des Gehäuses 9 über eine Crimphülse 21 mit den Kupferadern 20 des Kabels 16 verbunden ist.

Das Kontaktelement 19 weist - analog zum weiter unten beschriebenen Kontaktelement 1 - einen Hohlzylinder (In Figur 1 nicht zu sehen) auf, der in die zentrale Kühlflüssigkeitsleitung des Kabels 16 eingeschoben ist. Im Kontaktelement 19 ist eine durchgehende Bohrung eingebracht, die außen in einem Fluidstutzen 18' weitergeführt ist. Hierüber kann das im Ladesteckverbinder 5 erwärmte Fluid hinausströmen. Das Kontaktelement 19 weist außenseitig ein Gewinde (nicht gezeigt) auf und kann darüber in Verbindung mit einer Mutter zur elektrischen Anbindung an eine Stromschiene 22 angeschlossen werden. Die Stirnseite des Kontaktelements 19 und die Stirnseite der Mutter weisen jeweils Rändelungen auf, die ein Verdrehen bzw. ein Lösen verhindern. Dadurch ist ein zuverlässiger elektrischer Anschluss gewährleistet. Das Kontaktelement 19 und die zugehörige Mutter bestehen nicht aus Stahl sondern aus einem besonders leitfähigen Material mit hohem KupferAnteil. Dadurch wird sowohl eine Langlebigkeit der Verbindung als auch eine mechanische Festigkeit derselben gewährleistet.

Über die Fluidstutzen 18, 18' kann die Anschlusseinheit 2 an ein Kühlaggregat 23 der Ladesäule 8 angeschlossen werden.

Aus Figur 2 ist zu entnehmen, dass für jeden fluidgekühltem Kontakt 1 im Ladesteckverbinder 5 auch eine Anschlusseinheit 2 vorgesehen ist, die an eine Ladesäule 8 angeschlossen sind. Für weitere Kontaktelemente, die beispielsweise Signalströme übertragen oder zur Erdung vorgesehen sind, werden keine weiteren Anschlusseinheiten benötigt.

In die Fluideingangsöffnung 11 wird ein frisches Fluid mit niedriger Temperatur in die Anschlusseinheit 2 eingeleitet. Über die hohlen Pufferelemente 24 kann das Fluid zum Kontaktelement 1 des Ladesteckverbinders 5 gelangen. Dort nimmt das Fluid die beim Ladevorgang entstandene Wärme bzw. die Wärmeenergie auf. Das erwärmte Fluid wird über die zentrale Flüssigkeitsleitung des Kabels 16 zur Fluidausgangsöffnung 12 transportiert und wird im Kühlaggregat 23 wieder aufbereitet, das heißt wieder heruntergekühlt.

Im Ladesteckverbinder 5 ist mindestens ein fluidgekühltes Kontaktelement 1 verbaut. Das Kontaktelement 1 besteht aus einem Anschlussteil 3 und einem Kontaktteil 4. Das Anschlussteil 3 enthält eine axiale Bohrung und das Kontaktteil 4 enthält eine axiale Durchgangsbohrung. Sowohl die Bohrung wie auch die Durchgangsbohrung enthalten jeweils ein Innengewinde und können über eine Schraube (nicht gezeigt) miteinander reversibel verbunden werden. Das Kontaktteil 4 ist als so genannte Buchse mit insgesamt 6 Lamellen 7 ausgebildet. Das Anschlussteil 3 ist im Wesentlichen zylinderförmig ausgestaltet. Vom Hauptkörper axial abstehend ist ein Hohlzylinder 6 angeformt. Der Hohlzylinder 6 kann auch als Hohlnadel angesehen werden. Der Hohlzylinder 6 verjüngt sich zum Ende hin und mündet in einer Austrittsöffnung 13. Zwischen Austrittsöffnung 13 und Hauptkörper ist auf dem Hohlzylinder 6 eine Lamellenstruktur 14 aufgebracht. Im Anschlussteil 3 sind Öffnungen 15 eingebracht, die einen Zugang zu einem Hohlraum innerhalb des Anschlussteils 3 bilden. Der Hohlraum 16 steht ebenfalls in Verbindung mit dem Hohlraum, den der Hohlzylinder 6 bildet.

Die Austrittsöffnung 13 des Hohlzylinders 6 wird in die zentrale Kühlflüssigkeitsleitung des Kabels eingeschoben. Die Kühlflüssigkeit fließt in die Öffnungen 15 des Anschlussteils 3 ein. Der besagte Hohlraum des Anschlussteils 3 wird von der Kühlflüssigkeit durchströmt. Die im Betrieb hier entstandene Wärme wird von der Kühlflüssigkeit aufgenommen und über den Hohlraum des Hohlzylinders 6 über die zentrale Flüssigkeitsleitung wieder abtransportiert. In einem entfernten Kühlaggregat kann die Kühlflüssigkeit wieder runtergekühlt und in einem geschlossenen Kreislauf wieder den Öffnungen 15 zugeführt werden.

Am Ladesteckverbinder 5 ist ein Signalkabel 25 angeschlossen, über welches der Ladesteckverbinder 5 mit diversen Steuersignalen versorgt wird. Des Weiteren ist am Ladesteckverbinder 5 ein Erdungskabel 26 angeschlossen.

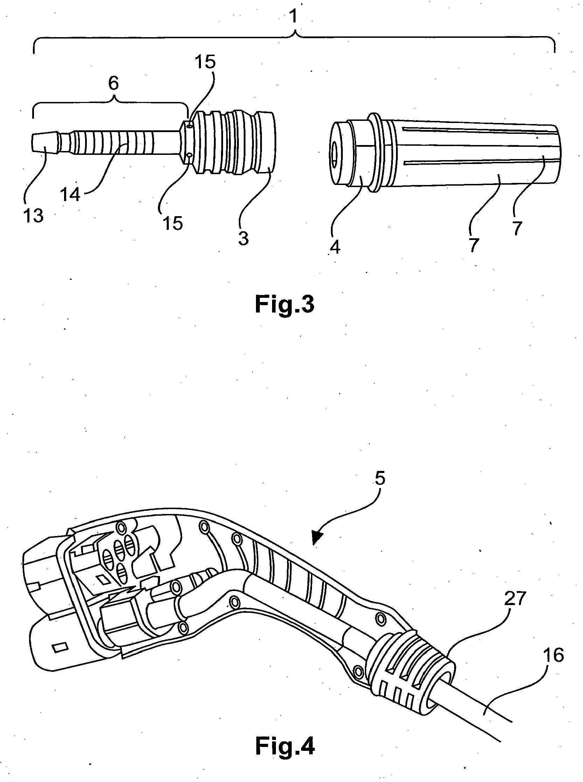

In Figur 4 ist ein Ladesteckverbinder 5 gezeigt, der bzw. dessen Kontaktelement 1 an ein fluidgekühltes Kabel 16 angeschlossen ist. In der Regel weist der Ladesteckverbinder 5 mehrere fluidgekühlte Kontaktelemente 1 auf. Jedes Kontaktelement 1 ist dann jeweils mit einem fluidgekühlten Kabel 16 verbunden. Die fluidgekühlten Kabel 16 und weitere Kabel werden in einem flexiblen Rohr (aus darstellerischen Gründen nicht gezeigt) vereint, welches vom Kabelabgang 27 des Ladesteckverbinder 5 abgeht

### Bezugszeichenliste

- 1: Kontaktelement
- 2: Anschlusseinheit
- 3: Anschlussteil
- 4: Kontaktteil
- 5: Ladesteckverbinder
- 6: Hohlzylinder
- 7: Lamelle
- 8: Ladesäule
- 9: Gehäuse
- 10: Kabelanschlussöffnung
- 11: Fluideingangsöffnung
- 12: Fluidausgangsöffnung
- 13: Austrittsöffnung
- 14: Lamellenstruktur
- 15: Öffnungen
- 16: Fluidgekühltes Kabel
- 17: Kabelverschraubung
- 18: Fluidstutzen
- 19: Kontaktelement
- 20: Kupferader
- 21: Crimphülse
- 22: Stromschiene
- 23: Kühlaggregat
- 24: Pufferelemente
- 25: Signalkabel
- 26: Erdungskabel

## Patentansprüche

1. Anschlusseinheit für (2) ein fluidgekühltes elektrisches Kabel (16), wobei die Anschlusseinheit (2) ein Gehäuse (9) umfasst, welches eine Kabelanschlussöffnung (10), eine Fluideingangsöffnung (11) und eine Fluidausgangsöffnung (12) aufweist.

2. Anschlusseinheit nach Anspruch 1
**dadurch gekennzeichnet, dass**
die Anschlusseinheit (2) an eine stationäre Ladesäule (8) für ein Elektrofahrzeug anschließbar ist.

3. Anschlusseinheit nach einem der vorstehenden Ansprüche
**dadurch gekennzeichnet, dass**
die Anschlusseinheit (2) an ein Kühlaggregat (23) für ein Kühlfluid anschließbar ist.

4. Anschlusseinheit nach einem der vorstehenden Ansprüche
**dadurch gekennzeichnet, dass**
die Kabelanschlussöffnung (10) und die Fluidausgangsöffnung (12) parallel zueinander ausgerichtet sind.

5. Anschlusseinheit nach einem der vorstehenden Ansprüche
**dadurch gekennzeichnet, dass**
die Fluideingangsöffnung (11) zu der Kabelanschlussöffnung (10) und/oder zu der Fluidausgangsöffnung (12) senkrecht ausgerichtet ist.

6. Anschlusseinheit nach einem der vorstehenden Ansprüche
**dadurch gekennzeichnet, dass**
die Fluidausgangsöffnung (12) ein elektrisches Kontaktelement (19) umfasst, welches innerhalb des Gehäuses (9) mit dem fluidgekühlten, elektrischen Kabel (16) verbindbar ist.

7. Anschlusseinheit nach vorstehendem Anspruch
**dadurch gekennzeichnet, dass**
die Verbindung zwischen dem fluidgekühlten, elektrischen Kabel (16) und dem Kontaktelement (19) über eine Crimphülse (21) realisiert ist.

8. Anschlusseinheit nach einem der vorstehenden Ansprüche
**dadurch gekennzeichnet, dass**
die Kabelanschlussöffnung (10) das fluidgekühlte, elektrische Kabel (16) umfasst und über eine Kabelverschraubung (17) mediendicht verschlossen ist.

9. Anschlusseinheit nach einem der vorstehenden Ansprüche
**dadurch gekennzeichnet, dass**
die Fluideingangsöffnung (11) näher an der Fluidausgangsöffnung (12) liegt als an der Kabelanschlussöffnung (10).

10. System aus einem Steckverbinder (5), einem fluidgekühlten Kabel (16) und einer Anschlusseinheit (2), vorzugsweise einer Anschlusseinheit (2) nach einem der vorstehenden Ansprüche.

11. System nach vorstehendem Anspruch,
**dadurch gekennzeichnet, dass**
das fluidgekühlte Kabel (16) im Querschnitt eine zentrale Kühlflüssigkeitsleitung aufweist, wobei um die Kühlflüssigkeitsleitung herum einzelne Leiter, vorzugsweise Kupferadern (20), positioniert sind.

12. System nach vorstehendem Anspruch,
**dadurch gekennzeichnet, dass**
die Kupferadern (20) von einer flüssigkeitsdichten Folie umschlossen sind, wobei auf der flüssigkeitsdichten Folie Pufferelemente (24) aufliegen, die von einem festen Kabelmantel umschlossen sind.

13. System nach vorstehendem Anspruch,
**dadurch gekennzeichnet, dass**
die Pufferelemente (24) hohl sind, so dass im Bereich zwischen flüssigkeitsdichter Folie und Kabelmantel eine Kühlflüssigkeit strömen kann.

14. System nach einem der vier vorstehenden Ansprüche,
**dadurch gekennzeichnet, dass**
der Ladesteckverbinder (5) zumindest ein fluidgekühltes, elektrisches Kontaktelement (1) aufweist,

15. System nach vorstehendem Anspruch,
**dadurch gekennzeichnet, dass**
das fluidgekühlte, elektrische Kontaktelement (1) ein Kontaktteil (4) und ein Anschlussteil (3) aufweist, wobei das Anschlussteil (3) mit einem elektrischen Leiter (9) eines Kabels (2) verbindbar ist, wobei dem Kontaktelement (1) über das fluidgekühlte Kabel Kühlflüssigkeit zuführbar ist.
